# EUROPÄISCHE PATENTSCHRIFT

(11) **EP 3 095 581 B1**
(45) Veröffentlichungstag und Bekanntmachung des Hinweises auf die Patenterteilung: **17.10.2018**
(21) Anmeldenummer: 16170318.6
(22) Anmeldetag: 19.05.2016
(51) Int. Cl.: B29C 49/42, B29C 49/78, F27B 9/16, B29C 49/64, B29C 49/06

(54) **VORRICHTUNG UND VERFAHREN ZUM ERWÄRMEN VON KUNSTSTOFFVORFORMLINGEN MIT WEGSTELLBARER BEWEGUNGSEINRICHTUNG**
METHOD AND DEVICE FOR HEATING PLASTIC PRE-FORMS WITH MOVEMENT DEVICE WHICH CAN BE PUT AWAY
DISPOSITIF ET PROCÉDÉ DESTINÉS AU CHAUFFAGE D'ÉBAUCHES EN PLASTIQUE AU MOYEN DE DISPOSITIFS DE DÉPLACEMENT POUVANT ÊTRE ESCAMOTÉS

(30) Priorität: 19.05.2015 DE 102015107855
(43) Veröffentlichungstag der Anmeldung: 23.11.2016
(73) Patentinhaber: Krones AG, 93073 Neutraubling (DE)
(72) Erfinder: Schönberger, Wolfgang, 93073 Neutraubling (DE)
(74) Vertreter: Bittner, Bernhard

(56) Entgegenhaltungen:
- EP-A2- 2 292 407
- EP-A2- 2 511 205
- EP-A2- 2 837 487
- US-B1- 6 264 457

## Beschreibung

Die vorliegende Erfindung bezieht sich auf eine Vorrichtung und ein Verfahren zum Erwärmen von Kunststoffvorformlingen. Derartige Vorrichtungen und Verfahren sind aus dem Stand der Technik seit langem bekannt. Dabei werden üblicherweise hergestellte Kunststoffvorformlinge innerhalb eines Ofens erwärmt und anschließend in diesem erwärmten Zustand einer Streckblasmaschine zugeführt, welche diese Kunststoffvorformlinge zu Kunststoffbehältnissen, wie insbesondere Kunststoffflaschen, expandiert.

Dabei werden in diesen Erwärmungseinrichtungen die Kunststoffvorformlinge über einen Einteilstern, wie beispielsweise einen Sägezahnstern, einer Heizgasse zugeführt. Dieser Sägezahnstern vereinzelt dabei die Kunststoffvorformlinge und bringt sie auf eine vorgegebene Teilung. Anschließend werden die Kunststoffvorformlinge auf Heizdorne aufgesteckt. Diese Heizdorne wiederum werden mittels einer Transportkette durch den Heiztunnel gefahren. Die Stelle, an der der Kunststoffvorformling von dem Sägezahnstern an den Heizdorn übergeben wird und der im Folgenden als Übergabepunkt für den Ofeneinlauf bezeichnet wird, muss sehr genau eingestellt sein, um einen reibungslosen Durchlauf der Kunststoffvorformlinge zu gewährleisten.

Bei aus dem Stand der Technik bekannten Anlagen wird dieser Sägezahnstern über einen Zahnriemen angetrieben, wobei dieser Zahnriemen wiederum mit dem Antrieb der Transportkette für die Heizdorne gekoppelt ist. Der Übergabepunkt wird hier ab Werk einmal festgestellt. Ändert sich die Mündung der Kunststoffvorformlinge, wird im Stand der Technik über eine zweite Sägezahngarnitur die Taschengröße und somit auch der Übergabepunkt genau angepasst. Eine Verschiebung dieses Punktes bei Formatwechsel ist folglich nur durch einen Wechsel der Einzelgarnitur, d.h. des Sägezahnsterns, möglich oder durch ein mechanisches Nachjustieren bzw. Justieren des Übergabepunktes. Letzteres ist jedoch für den Bediener nicht zu empfehlen, da dies eine zeitaufwendige und fehleranhaftende Tätigkeit bedeutet.

Die Kopplung zwischen diesen Antrieben hat weiterhin den Nachteil, dass bei Verklemmungen der Kunststoffvorformlinge ein auch nur "leichtes" Verreißen der Spannsätze im Antriebsstrang nicht oder erst spät erkannt wird. Dadurch verschlechtern sich die Übergaben der Kunststoffvorformlinge (ggfs. auch durch eine Verschiebung des Übergabepunkts) und es erhöht sich unbemerkt der Teileverschleiß an den Heizdornen und Transportspindeln.

Liegen weiterhin die Mündungen der Kunststoffvorformlinge im Halsdurchmesser sehr nahe beieinander, werden diese mit ein und demselben Sägezahnstern gefahren. So werden Teilekosten eingespart und vor allem die unbeliebten Wechsel und Umrüstzeiten beim Kunden vermieden.

Die Abstufung im Durchmessersprung des Kunststoffvorformlings liegt bei ca. 1 mm. Dies hat zur Folge, dass sich im ungünstigsten Fall der Übergabepunkt um 0,5 mm verschieben bzw. dadurch verschlechtern kann.

In diesen Fällen ist mindestens ein Übergabepunkt nicht bzw. nie ideal eingestellt. Entweder ist hier ein Übergabepunkt ideal und der andere folglich schlecht eingestellt, oder aber keiner der beiden Übergabepunkte ist schlecht, allerdings auch nicht ideal eingestellt.

Diese Vorgehensweise ist zwar insoweit vorteilhaft, als dass der Bediener die Garnituren nicht wechseln muss, hat jedoch den Nachteil, dass die Übergabegenauigkeit am Ofeneinlauf leidet. Es kann dadurch auch häufiger zu Aufsteckfehlern kommen, was wiederum die Übergabequalität allgemein und auch an das nachfolgende Maschinenmodul verschlechtert. Ebenso steigt der Vorformlingsverschleiß durch nicht zentriertes Eintauchen des Haltedorns in den Kunststoffvorformling, was durch einen vermehrten PET-Abrieb in der Maschine erkennbar wird.

Dokument EP 2 511 205 offenbart eine Vorrichtung zum Erwärmen von Kunststoffvorformlingen gemäß dem Oberbegriff von dem Anspruch 1.

Der vorliegenden Erfindung liegt daher die Aufgabe zugrunde, eine Vorgehensweise vorzuschlagen, welche derartige Ungenauigkeiten bei der Übergabe verhindert. Mit anderen Worten soll eine Möglichkeit geschaffen werden, um idealerweise stets den bestmöglichen Übergabepunkt für die Kunststoffvorformlinge zu wählen. Eine weitere Aufgabe der Erfindung besteht darin, bei auftretenden Ungenauigkeiten Beschädigungen an der Maschine vorzubeugen.

Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine erste Transporteinrichtung auf, welche die Kunststoffvorformlinge vereinzelt transportiert, wobei diese erste Transporteinrichtung eine Vielzahl von Aufnahmemitteln zur Aufnahme der Kunststoffvorformlinge aufweist. Weiterhin weist die Vorrichtung eine zweite Transporteinrichtung auf, welche die von der ersten Transporteinrichtung transportierten Kunststoffvorformlinge übernimmt und diese Kunststoffvorformlinge entlang eines vorgegebenen Transportpfades transportiert.

Weiterhin weist die zweite Transporteinrichtung eine Vielzahl von Halteelementen zum Halten der Kunststoffvorformlinge auf und es ist weiterhin wenigstens eine Erwärmungseinrichtung vorgesehen, welche die von der zweiten Transporteinrichtung transportierten Kunststoffvorformlinge erwärmt. Dabei ist wenigstens die erste Transporteinrichtung eine umlaufende Transporteinrichtung.

Erfindungsgemäß ist die Relativposition der Aufnahmemittel der ersten Transporteinrichtung in der Umlaufrichtung der ersten Transporteinrichtung gegenüber einer Position der Halteelemente bezüglich des Transportpfades veränderbar.

Diese Vorgehensweise erlaubt es, Störungen vorzubeugen, um so insbesondere korrekte Übergabepunkte zu gewährleisten. Damit erlaubt es diese Vorgehensweise, die Gefahr von Beschädigungen an der Maschine zu verringern.

Anstelle oder zusätzlich zu der hier beschriebenen Veränderung der Übergabeposition wäre es jedoch auch möglich, Beschädigungen auch bei auftretenden Fehlern bei der Übergabeposition durch eine Sicherungseinrichtung vorzubeugen.

Die Erfindung ist daher auch auf eine Maschine der oben beschriebenen Art gerichtet, welche weiterhin eine weitere Antriebseinrichtung zum Bewegen der Halteelemente in einer Längsrichtung der Kunststoffvorformlinge aufweist wobei die Vorrichtung weiterhin wenigstens eine weitere Antriebseinrichtung zum Antreiben wenigstens einer Transporteinrichtung aufweist.

Erfindungsgemäß weist die Vorrichtung wenigstens eine Sensoreinrichtung auf, welche wenigstens einen für wenigstens eine der beiden Antriebseinrichtungen charakteristischen Messwert erfasst und eine Steuerungseinrichtung welche dazu geeignet und bestimmt ist, die Antriebseinrichtung zum Bewegen der Halteelemente in Abhängigkeit von diesem charakteristischen Messwert zu steuern. Bevorzugt handelt es sich bei dieser Steuerungseinrichtung um eine Regeleinrichtung, welche die Antriebseinrichtung regelt. Eine Eingangsgröße dieser Steuerungseinrichtung ist damit bevorzugt der von der Sensoreinrichtung erfasste Messwert, etwa ein für ein Drehmoment einer Antriebseinrichtung charakteristischer Messwert.

Bei dieser Vorgehensweise wird, wie unten genauer erläutert, vorgeschlagen, dass mittels des besagten Messwertes erfasst wird, ob Störungen auftreten oder auftreten werden und in diesem Falle die Bewegung der Halteelemente beispielsweise angehalten wird, so dass es nicht zu einer Übergabe der Kunststoffvorformlinge von der ersten Transporteinrichtung an die zweite Transporteinrichtung kommt. Diese Sensoreinrichtung kann auch bei der oben beschriebenen Ausführungsform optional vorhanden sein.

Unter einer Bewegung der Halteelemente in der Längsrichtung der Kunststoffvorformlinge wird insbesondere verstanden, dass diese sich genau entlang der Längsrichtung bewegen. Es wäre jedoch auch eine Bewegung in einer hierzu schrägen Richtung denkbar.

Damit ist insbesondere die zweite Transporteinrichtung in der Transportrichtung der Kunststoffvorformlinge nach der ersten Transporteinrichtung angeordnet. Bevorzugt schließt sich die zweite Transporteinrichtung direkt an die erste Transporteinrichtung an und/oder übernimmt die Kunststoffvorformlinge unmittelbar von der ersten Transporteinrichtung. Bevorzugt transportiert auch die zweite Transporteinrichtung die Kunststoffvorformlinge vereinzelt. Bevorzugt entspricht eine Teilung der Aufnahmemittel der ersten Transporteinrichtung einer Teilung der Halteelemente der zweiten Transporteinrichtung.

Es wird damit bei der ersten oben dargestellten Vorgehensweise vorgeschlagen, dass eine insbesondere gezielte Veränderung der Umlaufposition der Aufnahmemittel gegenüber der Umlaufposition der Haltelemente vorgenommen werden kann, insbesondere um hierdurch den Übergabepunkt, an dem die Kunststoffvorformlinge von den Halteelementen ausgehend von den Aufnahmemitteln übernommen werden, angepasst bzw. verändert werden kann. Bei der zweiten Vorgehensweise können weitere Fehler, welche insbesondere durch eine ungewollte Verschiebung des Übergabepunkts entstehen können, vermieden werden.

Wie oben erwähnt, ist im Stand der Technik ein gemeinsamer Antrieb vorgesehen und damit sind die beiden Transporteinrichtungen gekoppelt. Eine Feinkorrektur ist nicht vorgesehen. Im Rahmen der Erfindung wird nunmehr vorgeschlagen, diese Kopplung wenigstens zeitweise aufhebbar zu gestalten, so dass eine Anpassung des Übergabepunktes erfolgen kann.

Unter einem umlaufenden Transportmittel wird verstanden, dass hier die Aufnahmemittel sich entlang eines geschlossenen Bewegungspfades, insbesondere eines kreisförmigen Bewegungspfades und/oder eines Bewegungspfades mit gekrümmten Abschnitten bewegen.

Bei einer weiteren bevorzugten Ausführungsform weist die erste Transporteinrichtung einen drehbaren Träger auf und die Aufnahmemittel sind bevorzugt Ausnehmungen, die insbesondere an einem Außenumfang dieses Trägers vorgesehen sind. Diese Ausnehmungen werden auch "Taschen" genannt. Diese Aufnahmemittel dienen zum Aufnehmen von Abschnitten der Kunststoffvorformlinge, insbesondere von Abschnitten, welche sich unterhalb eines Tragrings der Kunststoffvorformlinge befinden. Bevorzugt weist die erste Transporteinrichtung auch ein Führungselement, wie insbesondere eine um den drehbaren Träger umlaufende Führungsschiene auf. Die Kunststoffvorformlinge werden bevorzugt zwischen dieser Führungsschiene und den Aufnahmemitteln geführt.

Bei einer weiteren vorteilhaften Ausführungsform sind die Erwärmungseinrichtungen gegenüber dem Transportpfad der Kunststoffvorformlinge stationär angeordnet. Insbesondere handelt es sich dabei um Erwärmungseinrichtungen, welche die Kunststoffvorformlinge mit Infrarotstrahlung beaufschlagen. Bevorzugt weisen die Erwärmungseinrichtungen Heizröhren oder Heizstrahler auf, die sich bevorzugt wenigstens abschnittsweise entlang des Transportpfades der Kunststoffvorformlinge erstrecken. Es wäre jedoch auch möglich, dass es sich bei der Erwärmungseinrichtung um eine Mikrowellenerwärmungseinrichtung handelt, welche die Kunststoffvorformlinge zu deren Erwärmung mit Mikrowellen beaufschlagt. Auch hier könnten einzelne Mikrowellenstationen vorgesehen sein, welche an einem beweglichen, beispielsweise drehbaren Träger, gefördert werden.

Bevorzugt handelt es sich bei den Halteelementen der zweiten Transporteinrichtung um Dorne, welche in Mündungen der Kunststoffvorformlinge einführbar sind. Bevorzugt weisen dabei diese Dorne die gleiche Teilung auf, welche auch die Aufnahmemittel der ersten Transporteinrichtung aufweisen.

Bei einer weiteren vorteilhaften Ausführungsform weist die Vorrichtung eine weitere Antriebseinrichtung zum Bewegen der Halteelemente bzw. Dorne in einer Längsrichtung der Kunststoffvorformlinge auf. Bei dieser Antriebseinrichtung kann es sich beispielsweise um eine Führungs- oder Stellkurve handeln, welche aufgrund der Transportbewegungen der Haltelemente auch eine Bewegung der Halteelemente in der Längsrichtung der Kunststoffvorformlinge bewirkt.

Weiterhin weist die Vorrichtung bevorzugt eine Dreheinrichtung auf, welche die Halteelemente um deren Längsrichtung dreht und insbesondere wenigstens zeitweise während der Erwärmung dreht. Auf diese Weise ist auch eine gleichmäßige Erwärmung der Kunststoffvorformlinge in deren Umfangsrichtung möglich.

Wie erwähnt, handelt es sich bevorzugt bei den Aufnahmemitteln der ersten Transporteinrichtung um Taschen bzw. Ausnehmungen, welche die Kunststoffvorformlinge aufnehmen. Vorteilhaft ist auch die zweite Transporteinrichtung umlaufend ausgestaltet (und transportiert beispielsweise die Kunststoffvorformlinge entlang eines Transportpfades, der sich aus geradlinigen und gekrümmten Abschnitten zusammensetzt). Besonders bevorzugt weist die zweite Transporteinrichtung eine Transportkette auf, an der die Halteelemente angeordnet sind. Bevorzugt sind daher - wie oben erwähnt - die erste Transporteinrichtung und die zweite Transporteinrichtung hinsichtlich ihrer Transportbewegungen voneinander entkoppelt und/oder zumindest zeitweise entkoppelbar.

Bei einer weiteren bevorzugten Ausführungsform weist die erste Transporteinrichtung eine erste Antriebseinrichtung zum Antreiben der ersten Transporteinrichtung auf und die zweite Transporteinrichtung weist eine zweite Antriebseinrichtung zum Antreiben der zweiten Transporteinrichtung auf. Es werden damit hier im Gegensatz zu dem Stand der Technik verschiedene bzw. voneinander getrennte Antriebseinrichtungen vorgeschlagen. Insbesondere sind dabei diese Antriebseinrichtungen nicht miteinander gekoppelt. Bevorzugt handelt es sich bei wenigstens einer dieser Antriebseinrichtungen und insbesondere bei beiden Antriebseinrichtungen um elektromotorische Antriebseinrichtungen und insbesondere um Servomotoren. Servomotoren bieten den Vorteil, dass relativ unkompliziert eine Abfrage von bestimmten Messwerten etwa von Drehmomenten möglich ist.

Bei einer weiteren vorteilhaften Ausführungsform sind die erste Antriebseinrichtung und die zweite Antriebseinrichtung unabhängig voneinander steuerbar. Durch diese unabhängige Steuerbarkeit kann der Übergabepunkt bzw. die Position des Übergabepunktes eingestellt und/oder verändert werden. Insbesondere kann dadurch der Übergabepunkt korrigiert werden.

Für die Korrektur, insbesondere eine Offsetkorrektur zwischen den beiden Antriebseinrichtungen sind mehrere Vorgehensweisen denkbar. So wäre es denkbar, dass der Bediener der Maschine die Korrekturparameter selbst festlegt. So könnte beispielsweise über ein Eingabemittel (wie etwa eine Tastatur oder einen Touchscreen) der Korrekturparameter für einen anderen Kunststoffvorformling eingegeben werden. Die Vorrichtung kann dann den Offset zwischen den beiden Antrieben automatisch auf den geänderten Parameter einstellen. Auch wäre es denkbar, dass der Bediener selbst den Offset einstellt.

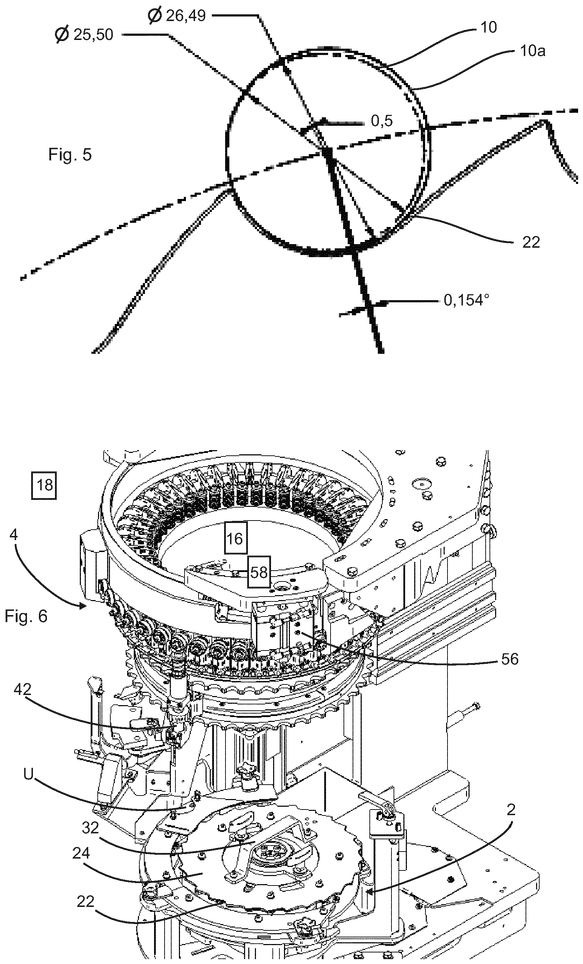

Weiterhin wäre es denkbar, dass der Bediener nur mehr das jeweilige in der Maschine hinterlegte Rezept auswählt. Korrekturparameter werden bevorzugt bereits in den Sortenparametern der Maschine hinterlegt, bzw. werden durch die Maschine aus bestimmten Parametern berechnet. Hierzu wäre es denkbar, in den bereits abgelegten Preform-Flaschen-Rezepten (=Sortenparameter) der Maschinensteuerung auch weitere Parameter, wie etwa die jeweiligen Preformhalsdurchmesser L1 (also den Durchmesser in dem Bereich, in dem der Kunststoffvorformling von der ersten Aufnahmeeinrichtung gegriffen wird) zu hinterlegen. Bei Formatumstellung muss der Bediener ein hinterlegtes Rezept neu anwählen bzw. laden. So kann man weiterhin (etwa zwischen der Maschinensteuerung und der Servosteuerung der Antriebseinrichtung) eine Prozessoreinrichtung anordnen, die aus den beiden Preformgrößen den Differenzwinkel ermittelt. Dieser Differenzwinkel kann als Korrekturwinkel (z.B. wie in Fig.5 0,154°) an die Sevoachse weitergegeben werden. Bevorzugt kann sich die Maschine bezogen auf den Ofeneinlauf selbstständig auf das neue Format einstellen. So kann eine vollautomatische Umstellung der Übergabepunkte erfolgen.

Dabei ist es möglich, dass eine auf die beiden Antriebseinrichtungen abgestimmte Steuerung vorhanden ist.

Daneben kann auch eine Sensoreinrichtung vorgesehen sein, um eine Korrektur des Übergabepunktes automatisch vorzunehmen. So kann beispielsweise eine Sensoreinrichtung einen Durchmesser des Kunststoffvorformlings erfassen und in Abhängigkeit von einem geänderten Durchmesser einen entsprechenden Offset der beiden Transporteinrichtungen bezüglich einander steuern bzw. bewirken (bzw. den Übergabepunkt anpassen).

Durch das Antreiben der zweiten Transporteinrichtung bzw. der Transportkette und das Antreiben der ersten Transporteinrichtung bzw. des Sägezahnsterns durch jeweils einen separaten Antrieb, beispielsweise einen Servoantrieb, besteht die Möglichkeit, in solchen Fällen eine Verschiebung des Übergabepunktes auszugleichen. Der Bediener braucht nur mehr den Korrekturparameter für beispielsweise eine zweite Größe (Mündungsdurchmesser) eines zweiten Kunststoffvorformlings - insbesondere an einem Bedienpult der Maschine - einzugeben und die Maschine kann sich selbstständig auf den jeweils optimalen Übergabepunkt einstellen. Auf diese Weise kann ein wirklicher Garniturenwechsel, der wesentlich zeitaufwendiger wäre, vermieden werden. Es wäre jedoch - wie oben erwähnt - insbesondere durch die Verwendung von Sensoreinrichtungen auch möglich, eine derartige Umstellung automatisch (d.h. ohne Zutun des Benutzers) erfolgen zu lassen.

Durch die vorgeschlagene Vorgehensweise können damit mehrere Nachteile aus dem Stand der Technik behoben werden. So kann verhindert werden, dass sich bei einer Verschiebung des Übergabepunkts unbemerkt der Teileverschleiß an den Heizdornen und der Transportspindeln erhöht oder sich Preforms verklemmen, was folglich zu einer Unsynchronität zwischen der Transportkette und dem Sägezahnstern führen könnte und dabei auch zu kapitalen Schäden an der Maschine insgesamt. Schäden gibt es vor allem dann, wenn die Halteelemente trotz Unsynchronität in den Preform eintauchen würden. Um ein Eintauchen bei Unsynchronität zu verhindern, muss konstruktiv eine Schutzvorrichtung, beispielsweise in Form einer schaltbaren Hubkurve, vorgesehen sein.

Bei einer weiteren vorteilhaften Ausführungsform ist die Antriebseinrichtung, welche zur Bewegung der Halteelemente in der Längsrichtung der Kunststoffvorformlinge dient, deaktivierbar und insbesondere im laufenden Betrieb deaktivierbar. Damit ist es insbesondere möglich, dass die Antriebseinrichtung bei fortgesetztem Betrieb der Vorrichtung und insbesondere bei fortgesetztem Betrieb der ersten Transporteinrichtung deaktiviert wird. Die Anmelderin behält sich vor, diesen Aspekt auch unabhängig von der oben beschriebenen Erfindung zu beanspruchen, also unabhängig davon, ob eine Entkopplung der beiden Transporteinrichtungen möglich sein soll.

Bei einer weiteren vorteilhaften Ausführungsform weist die Vorrichtung eine schaltbare Hubkurve auf, welche zum Zustellen der Haltedorne in die Mündungen der Kunststoffvorformlinge dient. In diesem Fall handelt es sich bei dieser Hubkurve um die oben erwähnte Antriebseinrichtung. Diese Hubkurve kann bei Bedarf weggeschaltet werden und so die Zustellung der Halteelemente in die Kunststoffvorformlinge ausgesetzt werden. Dies bedeutet gleichzeitig ein Deaktivieren der Antriebseinrichtung.

Da das eigentliche Problem bei Preformklemmern bei der Nichterkennung einer Verschiebung des Übergabepunktes, d.h. der Kunststoffvorformlingsübergabe, liegt, hat man bei dem separaten Servoantrieb die Möglichkeit, überhöhte bzw. hohe Drehmomentanstiege zu erfassen. Derartige Anstiege der Drehmomente sind üblicherweise Vorboten von Klemmern, so dass ein entsprechendes Signal an die Maschinensteuerung übergeben werden kann, dass das Kurvenhubsegment bei der Kunststoffvorformlingsübergabe frühzeitig weggeschaltet wird. Dies bewirkt, dass kein Eingriff des Haltedorns bzw. des Halteelements in den Kunststoffvorformling stattfindet. Dies kann insbesondere bei einer sehr wahrscheinlich nachfolgend auftretenden Unsynchronität stattfinden.

Bevorzugt weist die Vorrichtung daher eine Sensoreinrichtung auf, welche insbesondere für auftretende oder sich anbahnende Fehler beim Betrieb der Vorrichtung charakteristische Kennwerte erfasst. Hierbei kann es sich, wie erwähnt, beispielsweise um eine Drehmomentmesseinrichtung handeln, welche Drehmomente der Antriebseinrichtung der Transporteinrichtungen erfasst und/oder Größen, welche für ein derartiges Drehmoment charakteristisch sind oder sich hieraus ergeben, wie etwa elektrische Ströme. Mit anderen Worten erfasst bevorzugt die Sensoreinrichtung wenigstens einen Messwert, der für ein Drehmoment der wenigstens einen Antriebseinrichtung (welche die wenigstens eine Transporteinrichtung antreibt) charakteristisch ist. Bei diesem Messwert kann es sich beispielsweise um einen Strom handeln, mit dem diese Antriebseinrichtung betrieben wird.

Bevorzugt wird dieser Messwert wenigstens über einen vorgegebenen Zeitraum hinweg kontinuierlich erfasst. Dabei ist es möglich, dass dieser Messwert mit einem Referenzwert verglichen wird. Falls dieser Messwert den Referenzwert übersteigt, kann dies als Indiz dafür gewertet werden, dass auch das Drehmoment zu hoch ist. In diesem Fall kann etwa die Führungskurve weggeschaltet werden, so dass keine weiteren Kunststoffvorformlinge übergeben werden.

Bevorzugt weist die Antriebseinrichtung zum Bewegen der Halteelemente eine Führungskurve auf, welche sich bevorzugt wenigstens abschnittsweise entlang des Transportpfads der Kunststoffvorformlinge erstreckt. Die Führungskurve bewirkt dabei bevorzugt ein Zustellen der Halteelemente auf die Kunststoffvorformlinge. Diese Führungskurve ist dabei vorzugsweise schaltbar, kann also beispielsweise von einer Arbeitsposition, in der sie bewirkt, dass die Halteelemente auf die Kunststoffvorformlinge zugestellt werden, in eine Ruheposition, in der keine Zustellung der Halteelemente erfolgt, verfahren werden.

Bevorzugt weist die Antriebseinrichtung zum Bewegen der Halteelemente daher eine Stelleinrichtung zum Bewegen der Führungskurve auf. Bei dieser Stelleinrichtung kann es sich beispielsweise um einen elektromotorischen Antrieb handeln. Daneben wäre jedoch auch die Verwendung von hydraulischen oder pneumatischen Antrieben denkbar.

Auch könnte in derartigen Situationen - wie oben beschrieben - eine Korrektur des Übergabepunktes erfolgen. Bei Vorsehen eines Servoantriebes bzw. einer Servoachse besteht die Möglichkeit, das gerade benötigte Drehmoment aufzuzeichnen bzw. auszuwerten. Das Betriebsmoment, welches bei ordnungsgemäß beladenen Kunststoffvorformlingen nötig ist, ist bekannt. Steigt nun das Drehmoment über eine vordefinierte Grenze an (z.B. das Dreifache des Betriebsdrehmoments), wird vorsorglich das schaltbare Hubkurvensegment am Ofeneinlauf weggeschaltet.

Bei einer weiteren vorteilhaften Ausführungsform weist die Vorrichtung daher eine Sensoreinrichtung auf, welche wenigstens eine für die Übergabe der Kunststoffvorformlinge von der ersten Transporteinrichtung an die zweite Transporteinrichtung charakteristische Größe erfasst. Vorteilhaft handelt es sich hierbei um ein Drehmoment, welches beispielsweise erforderlich ist, um ein Halteelement der zweiten Transporteinrichtung auf die Kunststoffvorformlinge zuzustellen. Die Servoachse bzw. der Antrieb, der ein Vielfaches des Betriebsdrehmoments leisten kann, dreht immer noch synchron weiter. Wenn das Drehmoment nicht weiter ansteigt, läuft die Maschine im Produktionsbetrieb weiter, ohne jedoch die schadhaften Kunststoffvorformlinge zu beladen. Diese Kunststoffvorformlinge können dann auch nicht zu Schäden oder Aufsteckfehlern am Ofeneinlauf und an nachfolgenden KunststoffFlaschen-Übergaben bzw. allgemein Verarbeitungsschritten führen.

Steigt jedoch das Drehmoment noch weiter an, ist dies ein Indiz dafür, dass es zu einem Vorformlingsklemmer und folglich zu einer Unsynchronität kommen wird. In diesem Fall kann der Servoantrieb vorteilhaft auch als elektrische Kupplung fungieren und abschalten bzw. auskuppeln. In diesem Fall gibt bevorzugt eine Maschinensteuerung das Signal zum geregelten Anhalten der Maschine und der Bediener kann den oder die schadhaften Kunststoffvorformlinge aus dem Sägezahn entnehmen.

In beiden Fällen werden die Maschinenkomponenten vor den schädlichen Folgen von Kunststoffvorformlingklemmern bzw. von schlecht zugeführten Kunststoffvorformlingsqualitäten geschützt.

Bei einer weiteren vorteilhaften Ausführungsform ist eine Steuerungseinrichtung vorgesehen, welche einen Offset zwischen den Positionen der ersten Transporteinrichtung und der Position der zweiten Transporteinrichtung (und insbesondere zwischen den Aufnahmemitteln der ersten Transporteinrichtung und den Halteelementen der zweiten Transporteinrichtung) einstellen bzw. korrigieren kann. Vorteilhaft weisen dabei - wie oben erwähnt - die Antriebseinrichtungen jeweils Servoantriebe auf.

Unabhängig von der hier beschriebenen Antriebslösung wäre jedoch auch eine mechanische Lösung denkbar. So wäre es denkbar, dass ein Offset des Sägezahnsterns bzw. eine Veränderung der Drehstellung gegenüber dem Antrieb auch manuell durchführbar ist. So wäre es weiterhin möglich, dass der Antrieb der ersten und der zweiten Transporteinrichtung miteinander gekoppelt sind und so prinzipiell eine dauerhafte Kopplung besteht. Diese Kopplung könnte jedoch durch einen Benutzereingriff gelöst werden, etwa indem eine gewisse Drehstellungsveränderung der ersten Transporteinrichtung bzw. eines drehbaren Sägezahnsterns gegenüber seinem Träger, beispielsweise einer Welle, ermöglicht wird.

In diesem Falle könnte der Benutzer beispielsweise bei Umstellung auf leicht unterschiedliche Kunststoffvorformlinge auch die relative Drehstellung der ersten Transporteinrichtung bzw. des Sägezahnsterns gegenüber der zweiten Transporteinrichtung, insbesondere der Transportkette, verändern. So wäre es möglich, dass die erste Transporteinrichtung eine drehbare Welle aufweist und ein Sägezahnstern an dieser Welle angeordnet ist. Die Drehstellung dieses Sägezahnsterns gegenüber der Welle kann insbesondere durch einen Benutzereingriff verändert werden.

Dabei wäre es möglich, dass durch diese Veränderung der Drehstellung eine bestimmte Bandbreite an Kunststoffvorformlingen behandelbar ist. Beispielsweise über Tabellen könnte der Benutzer Informationen erhalten, in welche Drehstellung der Sägezahn für eine ideale Einstellung des Übergabepunktes gebracht werden müsste. Auch wäre insoweit eine halbautomatische Einstellung möglich. So könnte eine Sensoreinrichtung etwa eine Fehlstellung erfassen oder aber es könnte dem Benutzer ein Winkel mitgeteilt werden, um welchen er den Sägezahn drehen muss, damit der Übergabepunkt ideal liegt. So könnte beispielsweise die erste Transporteinrichtung auch eine Ableseeinrichtung, wie etwa eine Skala aufweisen, welche dem Benutzer exakt die Winkelstellung des Sägezahnsterns angibt. Daneben wäre jedoch auch das Vorsehen eines Antriebes zum Einstellen eines derartigen Offsets denkbar.

Bei einer weiteren vorteilhaften Ausführungsform weist die Vorrichtung eine Zuführeinrichtung auf, um der ersten Transporteinrichtung die Kunststoffvorformlinge zuzuführen. Bevorzugt vereinzelt dabei die erste Transporteinrichtung diese Kunststoffvorformlinge. Als derartige Zuführeinrichtung könnte beispielsweise eine Zuführschiene vorgesehen sein, in der die Kunststoffvorformlinge insbesondere unmittelbar aufeinanderfolgend transportiert werden.

Bei einer weiteren vorteilhaften Ausführungsform weist die Vorrichtung eine Steuerungseinrichtung zum Steuern der beiden Antriebseinrichtungen auf. Damit ist hier vorzugsweise eine übergeordnete Steuerung vorgesehen, welche beide Antriebseinrichtungen steuert und insbesondere auch derart steuert, dass ein Übergabepunkt ideal eingeregelt werden kann. Bevorzugt handelt es sich bei der Steuerungseinrichtung um eine Regelungseinrichtung, welche in der Lage ist, den Übergabepunkt einzuregeln. Als Stellgröße für eine derartige Regelungseinrichtung könnte dabei etwa das oben erwähnte Drehmoment fungieren und als Regelgröße der Offset zwischen den Transporteinrichtungen.

Vorteilhaft ist diese Steuerungseinrichtung dazu geeignet und bestimmt, wenigstens eine der beiden Antriebseinrichtungen auch auf Basis eines Parameters zu steuern, der für eine Geometrie der Kunststoffvorformlinge charakteristisch ist. Insbesondere können dabei eine oder beide Antriebseinrichtungen auch in Abhängigkeit von einem Halsdurchmesser der Kunststoffvorformlinge gesteuert werden. Dieser Halsdurchmesser bringt - wie unten genauer erläutert - gegebenenfalls eine Verschiebung des Übergabepunktes mit sich. Die Steuerungseinrichtung kann dabei auf Basis beispielsweise einer Benutzereingabe etwa auf Basis eines neuen Rezeptes einen Offset zwischen den beiden Transporteinrichtungen einsteuern bzw. einstellen, so dass wiederum ein idealer Übergabepunkt für die Kunststoffvorformlinge erreicht wird.

Bei einer weiteren vorteilhaften Ausführungsform weist die Vorrichtung eine Prozessoreinrichtung auf, welche aus wenigstens einer Kenngröße eines Kunststoffvorformlings einen Offset zwischen beiden Antriebseinrichtungen ermittelt und/oder berechnet. Bei dieser Kenngröße handelt es sich insbesondere um eine Halsgeometrie, d.h. insbesondere einen Vergleich der beiden Halsgeometrien. Aus diesem Vergleich kann ein Korrekturwinkel ermittelt werden.

Bei einer weiteren vorteilhaften Ausführungsform wird eine Relativposition der Aufnahmemittel der ersten Transporteinrichtung in der Umlaufrichtung der ersten Transporteinrichtung gegenüber einer Position der Halteelemente bezüglich des Transportpfades verändert bzw. ist veränderbar, um so die Übernahmeposition bzw. den Übergabepunkt, an dem die zweite Transporteinrichtung die Kunststoffvorformlinge übernimmt, zu verändern. Vorteilhaft ist dabei eine geringfügige Veränderung möglich, besonders bevorzugt eine Veränderung von +/-5° bezogen auf die Umlauflänge (d.h. den Umlaufweg eines Aufnahmemittels), bevorzugt von +/- 3%, bevorzugt von +/- 1 %, bevorzugt von +/- 0,5% und bevorzugt von +/- 0,3%.

Wie oben erwähnt, weist bevorzugt die erste Transporteinrichtung einen drehbaren Träger auf und bevorzugt sind die Aufnahmemittel als Ausnehmungen an einem Außenumfang dieses Trägers ausgebildet. Dabei ist vorteilhaft dieser Träger austauschbar bzw. durch andere Träger einwechselbar. So können beispielsweise Träger mit unterschiedlichen Geometrien der Aufnahmetaschen gegeneinander ausgetauscht werden.

Die vorliegende Erfindung ist weiterhin auf ein Verfahren zum Erwärmen von Kunststoffvorformlingen gerichtet, wobei die Kunststoffvorformlinge mittels einer ersten Transporteinrichtung mittels Aufnahmemitteln der ersten Transporteinrichtung transportiert werden und in einer vorgegebenen Übergabeposition von einer zweiten Transporteinrichtung übernommen werden und von dieser zweiten Transporteinrichtung mittels Halteelementen, welche die Kunststoffvorformlinge halten, entlang eines vorgegebenen Transportpfades transportiert werden. Weiterhin werden die Kunststoffvorformlinge wenigstens zeitweise während dieses Transports entlang des Transportpfades von wenigstens einer Erwärmungseinrichtung erwärmt.

Erfindungsgemäß ist eine Relativposition von Aufnahmemitteln der ersten Transporteinrichtung in der Umlaufrichtung der ersten Transporteinrichtung gegenüber einer Position der Halteelemente bezüglich des Transportpfades (der Halteelemente) veränderbar. Mit anderen Worten wird bevorzugt gezielt diese Relativposition verändert, beispielsweise um einen Umstellungsbetrieb, insbesondere in Abhängigkeit von geometrischen Parametern der Kunststoffvorformlinge zu verändern. Bevorzugt erfolgt die Veränderung der Relativposition, um einen Übergabepunkt, an dem die Kunststoffvorformlinge von der ersten Transporteinrichtung an die zweite Transporteinrichtung übergeben werden, zu verändern. Bevorzugt wird die erste Transporteinrichtung von einer ersten Antriebseinrichtung angetrieben und die zweite Transporteinrichtung wird von einer zweiten Antriebseinrichtung angetrieben. Bevorzugt wird die Relativposition zwischen den Aufnahmemitteln der ersten Transporteinrichtung und den Haltemitteln der zweiten Transporteinrichtung durch eine Steuerung wenigstens einer der beiden Antriebseinrichtungen geändert. Auf diese Weise kann beispielsweise in Offset zwischen den Antrieben geändert werden.

Alternativ oder zusätzlich zur Veränderbarkeit der Relativposition kann bei dem hier beschriebenen Verfahren auch vorgesehen sein, dass wenigstens eine Antriebseinrichtung wenigstens eine Transporteinrichtung antreibt und die Halteelemente in einer Längsrichtung der Kunststoffvorformlinge mittels einer weiteren Antriebseinrichtung bewegt werden. Erfindungsgemäß wird hier wenigstens ein für wenigstens die Antriebseinrichtung charakteristischer Messwert erfasst und die weitere Antriebseinrichtung in Abhängigkeit von diesem Messwert gesteuert.

Bevorzugt handelt es sich bei dem charakteristischen Messwert um einen für ein Drehmoment wenigstens einer Antriebseinrichtung für die Transporteinrichtung charakteristischen Messwert. Bevorzugt wird dieser Messwert kontinuierlich erfasst und/oder mit wenigstens einem Grenzwert verglichen.

Bevorzugt kann in Abhängigkeit von diesem Messwert die weitere Antriebseinrichtung aktiviert und/oder deaktiviert werden, also beispielsweise die Zustellung der Halteelemente auf die Kunststoffvorformlinge zu aktiviert und/oder deaktiviert werden.

Bevorzugt werden die Kunststoffvorformlinge entlang eines vorgegebenen Bereichs ihres Transportpfades sowohl von den Aufnahmemitteln, als auch von den Halteelementen kontaktiert bzw. geführt. Hierbei handelt es sich insbesondere um denjenigen Bereich, in welchem die Halteelemente in die Kunststoffvorformlinge eintauchen. Damit kann der Übergabepunkt auch als Übergabebereich aufgefasst werden.

Weitere Vorteile und Ausführungsformen ergeben sich aus den beigefügten Zeichnungen:
Darin zeigen:
- Fig. 1: eine schematische Darstellung einer Vorrichtung zum Erwärmen von Kunststoffvorformlingen;
- Fig. 2: eine Darstellung einer Vorrichtung zum Erwärmen von Kunststoffvorformlingen im Detail;
- Fig. 3: eine Darstellung eines Abschnittes eines zu erwärmenden Kunststoffvorformlings;
- Fig. 4: eine Detailansicht der ersten Transporteinrichtung;
- Fig. 5: eine Darstellung zur Veranschaulichung von Verschiebungen des Übergabepunktes bei unterschiedlichen Kunststoffvorformlingen;
- Fig. 6: eine weitere Darstellung einer erfindungsgemäßen Vorrichtung zum Erwärmen von Kunststoffvorformlingen; und
- Fig. 7: eine weitere Detailansicht einer Vorrichtung zum Erwärmen von Kunststoffvorformlingen.

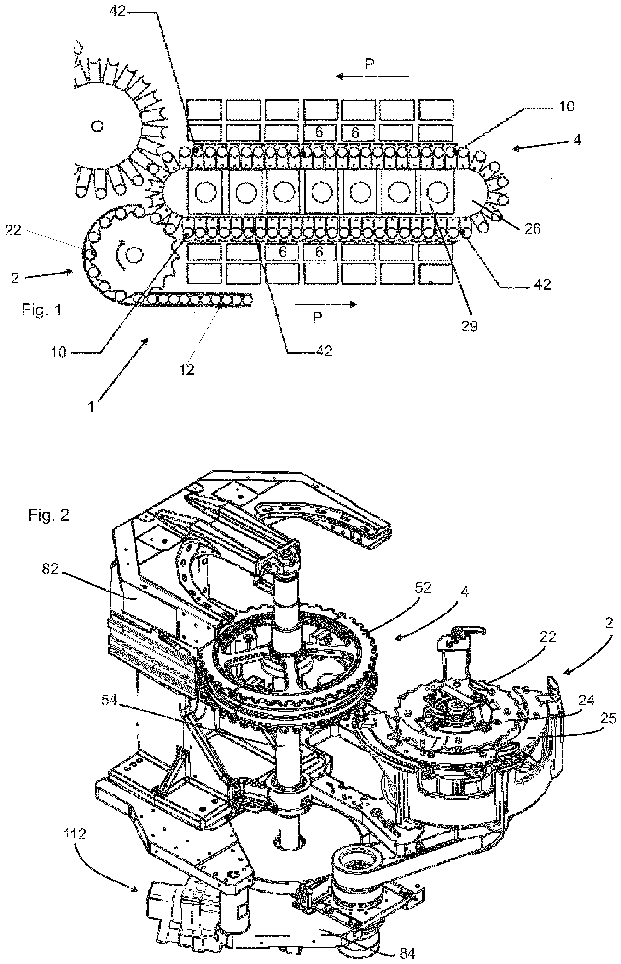

Figur 1 zeigt eine schematische Darstellung einer Vorrichtung 1 zum Erwärmen von Kunststoffvorformlingen 10. Dabei werden diese Kunststoffvorformlinge 10 über eine Zuführeinrichtung 12 einer ersten Transporteinrichtung 2 zugeführt. Diese erste Transporteinrichtung 2 ist hier ein Sägezahnstern, der eine Vielzahl von Aufnahmemitteln 22 in Form von Ausnehmungen aufweist. Die Kunststoffvorformlinge werden in diesen Ausnehmungen geführt. Die erste Transporteinrichtung 2 übergibt die Kunststoffvorformlinge an eine zweite Transporteinrichtung 4. Diese zweite Transporteinrichtung 4 weist ebenfalls ein umlaufendes Transportmittel, wie eine Transportkette auf, an der eine Vielzahl von Halteelementen 42 angeordnet ist.

Wie sich aus der Figur ergibt, erlauben diese Halteelemente dabei auch eine Drehung der Kunststoffvorformlinge um deren Längsrichtung bzw. Längsachse. Die Bezugszeichen 6 beziehen sich auf Erwärmungseinrichtungen bzw. Heizkästen, die zum Erwärmen der Kunststoffvorformlinge 10 dienen. Das Bezugszeichen 29 kennzeichnet Kühleinrichtungen, welche die Kunststoffvorformlinge zumindest zeitweise während ihrer Erwärmung mit Kühlluft beaufschlagen. Auf diese Weise kann eine auch in radialer Richtung der Kunststoffvorformlinge gleichmäßige Erwärmung erreicht werden. Das Bezugszeichen P kennzeichnet den Transportpfad der Kunststoffvorformlinge während des Transports mit der zweiten Transporteinrichtung 4.

Figur 2 zeigt eine Detaildarstellung der Vorrichtung 1 zum Erwärmen von Kunststoffvorformlingen. Dabei ist wieder die erste Transporteinrichtung 2 dargestellt, welche den Sägezahnstern 24 mit den Aufnahmemitteln 22 aufweist. Das Bezugszeichen 25 kennzeichnet eine Führungsschiene, welche gemeinsam mit den Ausnehmungen 22 die (nicht gezeigten) Kunststoffvorformlinge führt.

Das Bezugszeichen 54 kennzeichnet eine Antriebswelle, welche ein Umlenkrad 52, an dem eine (nicht gezeigte) Transportkette angeordnet ist, antreibt bzw. führt. Das Bezugszeichen 112 kennzeichnet eine Antriebseinrichtung, welche über ein (nicht gezeigtes) Getriebe sowohl den Sägezahnstern 24 als auch das Umlenkrad 52 antreibt. Bei der in Figur 2 gezeigten Darstellung sind die beiden Antriebe miteinander gekoppelt. Damit ist hier - wie aus dem Stand der Technik bekannt - ein synchroner Antrieb des Transportsterns 24 und des Umlenkrades 52 vorgesehen. Gleichwohl wäre es hier möglich, einen Offset dadurch zu erreichen, dass eine Drehstellung des Transportsterns 24 gegenüber einer (nicht dargestellten) Antriebswelle ermöglicht wird.

Das Bezugszeichen 82 bezieht sich auf einen Halter für die Antriebseinheit und das Bezugszeichen 84 auf eine untere Tischplatte.

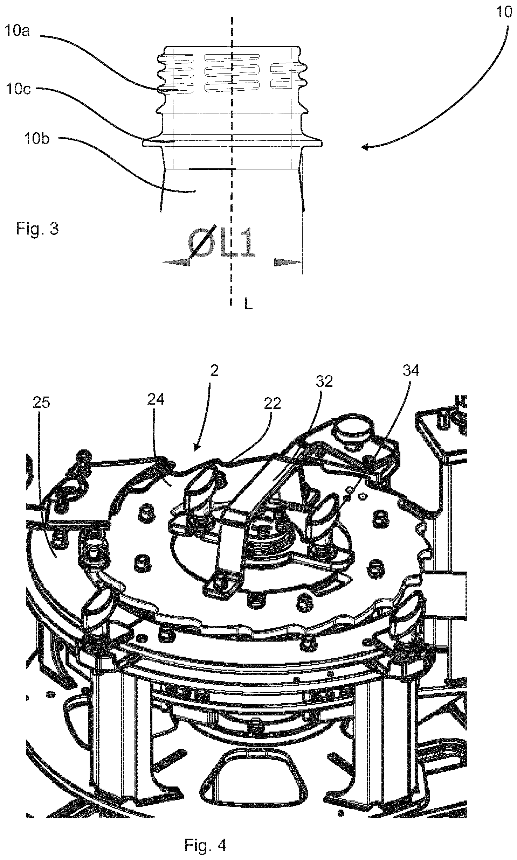

Figur 3 zeigt eine Detailansicht eines Kunststoffvorformlings 10, genauer gesagt dessen oberen bzw. Mündungsbereich. Dabei bezieht sich das Bezugszeichen 10a auf einen Mündungsabschnitt, das Bezugszeichen 10c auf einen Tragring und das Bezugszeichen 10b auf einen Grundkörper des Kunststoffvorformlings. Dieser Grundkörper des Kunststoffvorformlings weist dabei einen gewissen Querschnitt L1 auf. An diesen Querschnitt sind die Aufnahmemittel 22 der ersten Transporteinrichtung 2 angepasst. Wie oben erläutert, ist es möglich, dass die Vorrichtung sich selbst über Sortenparameter trimmt und optimiert. Dabei wird ein Mittenversatz über eine Winkelkorrektur bevorzugt selbstständig errechnet und ausgeglichen. Der Bediener braucht nichts Mechanisches zu wechseln, umbauen oder nachzustellen. Bei jeder Kunststoffvorformlingssorte ist die ideale Einstellung des Übergabepunktes und somit eine Erhöhung der Preform-Übergabegenauigkeit gegeben. Das Bezugszeichen L kennzeichnet eine Längsrichtung der Kunststoffvorformlinge.

Figur 4 zeigt eine schematische Darstellung einer erfindungsgemäßen ersten Transporteinrichtung 2. Hier ist wieder der Transportstern 24 mit den Ausnehmungen 22 dargestellt. Auch dargestellt ist die außen umlaufende Führungsschiene 25, wobei deren Position gegenüber dem Sägezahnstern 24 einstellbar ist. Das Bezugszeichen 32 kennzeichnet ein Griffelement, mit dem etwa zu Montagzwecken der Transportstern 24 abgenommen werden kann. Daneben sind Befestigungsmittel 34 vorgesehen, welche ein Lösen des Transportsterns 24 ermöglichen. Daneben kann es hier auch vorgesehen sein, dass die Befestigungsmittel 34 gelöst werden, um anschließend den Transportstern 24 geringfügig zur Einstellung eines Offsets zu drehen.

Figur 5 veranschaulicht die Verschiebung eines Offsets aufgrund unterschiedlicher Preform-Geometrien. Ausgegangen wird hierbei von einer Toleranz für den Kunststoffvorformling in Höhe von 1 mm. Dabei sind ein Kunststoffvorformling 10 und ein Kunststoffvorformling 10a gezeigt, wobei der Kunststoffvorformling 10 einen Durchmesser von 25,50 mm und der Kunststoffvorformling 10a einen Durchmesser von 26,49 mm aufweist. Beide Kunststoffvorformlinge sollen mit dem gleichen Aufnahmemittel 22 gefördert werden. Man erkennt, dass der Mittelpunkt der Kunststoffvorformlinge sich um 0,5 mm verschiebt. Dies führt wiederum dazu, dass sich auch der Übergabepunkt um bis zu 0,5 mm verschieben und dadurch verschlechtern kann. Gerechnet auf den Radius des Sägezahnsterns 24 führt dies zu einer Winkelverschiebung von den hier dargestellten 0,154°. Diese Winkelverschiebung kann nunmehr von den Steuereinrichtungen der Vorrichtungen berücksichtigt werden, um so den Übergabepunkt entsprechend zu korrigieren.

Figur 6 zeigt eine Darstellung einer Vorrichtung zum Erwärmen von Kunststoffvorformlingen. Dabei ist wieder die erste Transporteinrichtung 2 gezeigt sowie ein Teil der zweiten Transporteinrichtung 4. Das Bezugszeichen 42 kennzeichnet ein Halteelement, wie hier einen Dorn, der in die Kunststoffvorformlinge einführbar ist. Das Bezugszeichen 56 kennzeichnet teilweise eine Führungskurve, welche zum Zustellen der Halteelemente auf die Kunststoffvorformlinge dient. Diese Führungskurve bewirkt insbesondere ein Einführen der Haltedorne 42 in die Kunststoffvorformlinge. Wie oben erwähnt, kann bevorzugt diese Führungskurve deaktiviert bzw. weggestellt werden, um Beschädigungen an der Vorrichtung, etwa durch Verklemmungen von Kunststoffvorformlingen zu vermeiden. Das Bezugszeichen 50 kennzeichnet in ihrer Gesamtheit die Antriebseinrichtung, welche zum Bewegen der Halteelemente in der Längsrichtung der Kunststoffvorformlinge dient. Die Führungskurve 56 ist ein Bestandteil dieser Antriebseinrichtung 50.

Hierzu kann beispielsweise eine (ebenfalls einen Bestandteil der Antriebseinrichtung bildende) Stelleinrichtung 58 zum Bewegen der Führungskurve vorgesehen sein, wie etwa ein hydraulischer, pneumatischer, elektromotorischer oder magnetischer Antrieb. Mittels dieser Stelleinrichtung kann die Führungskurve weggeschaltet werden und so die Zustellung der Haltelemente 42 auf die Kunststoffvorformlinge zu deaktiviert werden.

Das Bezugszeichen 16 kennzeichnet grob schematisch eine Steuerungseinrichtung, welche zum Steuern der Antriebseinrichtung 50, und insbesondere zum Steuern der Stelleinrichtung dient. Das Bezugszeichen 18 kennzeichnet eine Sensoreinrichtung, welche ein Drehmoment der ersten Antriebseinrichtung 26 und/oder der zweiten Antriebseinrichtung 46 (bzw. einen hierfür charakteristischen Wert wie etwa einen Strom) erfasst. In Reaktion auf dieses erfasste Drehmoment kann die Antriebseinrichtung 50, genauer gesagt insbesondere die Stelleinrichtung 58 (insbesondere durch die Steuerungseinrichtung 16) veranlasst werden, die Führungskurve wegzustellen und somit die Zustellung der Halteelemente auf die Kunststoffvorformlinge zu zu deaktivieren.

Das Bezugszeichen U kennzeichnet einen Übergabepunkt, an dem die Kunststoffvorformlinge von der ersten Transporteinrichtung an die zweite Transporteinrichtung übergeben werden. Entsprechend könnte dieser Punkt auch als Übernahmepunkt bezeichnet werden, an dem die zweite Transporteinrichtung 4 die Kunststoffvorformlinge 10 von der ersten Transporteinrichtung 2 übernimmt. Durch eine Veränderung der Positionen der Aufnahmemittel 22 gegenüber den Halteelementen 42 kann dieser Übergabepunkt verschoben werden.

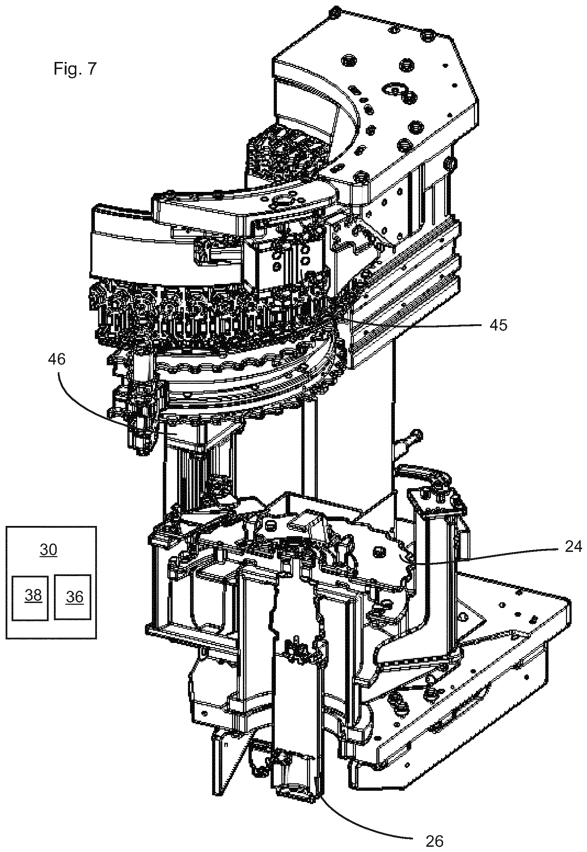

Figur 7 zeigt eine weitere Darstellung einer erfindungsgemäßen Vorrichtung. Hier ist auch eine erste Antriebseinrichtung 26 dargestellt, welche über eine Antriebswelle 27 den Transportstern 24 antreibt. Ebenfalls dargestellt ist eine zweite Antriebseinrichtung 46, welche das Umlenkrad 52 antreibt. Das Bezugszeichen 30 kennzeichnet grob schematisch eine Steuerungseinrichtung, welche die beiden Antriebseinrichtungen 26 und 46 steuert. Auf diese Weise kann der in Figur 6 gezeigte Übergabepunkt U bewusst, wenn auch lediglich geringfügig, verschoben werden. Das Bezugszeichen 36 kennzeichnet eine Prozessoreinrichtung, welche unter Zugrundelegung der Daten und insbesondere der Durchmesser unterschiedlicher Kunststoffvorformlinge eine Korrektur eines Offsets zwischen den beiden Transporteinrichtungen 2, 4 berechnet. Daneben kann ein Eingabemittel 38 vorgesehen sein, über welches der Benutzer Daten eingeben kann, beispielsweise Daten, welche den zu verarbeitenden Kunststoffvorformling 10 betreffen.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- L1: Querschnitt
- P: Transportpfad
- L: Längsrichtung der Kunststoffvorformlinge
- 1: Vorrichtung
- 2: erste Transporteinrichtung
- 4: zweite Transporteinrichtung
- 6: Erwärmungseinrichtungen/Heizkästen
- 10: Kunststoffvorformlinge
- 10a: Mündungsabschnitt/Kunststoffvorformling
- 10b: Grundkörper des Kunststoffvorformlings
- 10c: Tragring
- 12: Zuführeinrichtung
- 16: Steuerungseinrichtung
- 18: Sensoreinrichtung
- 22: Aufnahmemittel/Ausnehmungen
- 24: Sägezahnstern/Transportstern
- 25: Führungsschiene
- 26: Antriebseinrichtung
- 27: Antriebswelle
- 29: Kühleinrichtung
- 30: Steuerungseinrichtung
- 32: Griffelement
- 34: Befestigungsmittel
- 36: Prozessoreinrichtung
- 38: Eingabemittel
- 42: Halteelemente/Haltedorne
- 46: Antriebseinrichtung
- 50: Antriebseinrichtung
- 52: Umlenkrad/Führungskurve
- 54: Antriebswelle
- 56: Führungskurve
- 58: Stelleinrichtung
- 82: Halter
- 84: untere Tischplatte
- 112: Antriebseinrichtung (Stand der Technik)

## Patentansprüche

1. Vorrichtung (1) zum Erwärmen von Kunststoffvorformlingen (10) mit einer ersten Transporteinrichtung (2), welche die Kunststoffvorformlinge (10) vereinzelt transportiert, wobei diese erste Transporteinrichtung (2) eine Vielzahl von Aufnahmemitteln (22) zur Aufnahme der Kunststoffvorformlinge (10) aufweist, mit einer zweiten Transporteinrichtung (4), welche die von der ersten Transporteinrichtung (2) transportierten Kunststoffvorformlinge übernimmt und diese Kunststoffvorformlinge (10) entlang eines vorgegebenen Transportpfads (P) transportiert, wobei die zweite Transporteinrichtung (4) eine Vielzahl von Halteelementen (42) zum Halten der Kunststoffvorformlinge (10) aufweist und mit wenigstens einer Erwärmungseinrichtung (6), welche die von der zweiten Transporteinrichtung (4) transportierten Kunststoffvorformlinge (10) erwärmt, wobei wenigstens die erste Transporteinrichtung (2) eine umlaufende Transporteinrichtung (2) ist, wobei die Vorrichtung eine Antriebseinrichtung (50) zum Bewegen der Halteelemente (42) in einer Längsrichtung (L) der Kunststoffvorformlinge (10) aufweist und die Vorrichtung (1) wenigstens eine Antriebseinrichtung (26, 46) zum Antreiben wenigstens einer Transporteinrichtung (2, 4) aufweist, wobei die Vorrichtung wenigstens eine Sensoreinrichtung (18) aufweist, **dadurch gekennzeichnet, dass** die Sensoreinrichtung wenigstens einen für wenigstens eine der beiden Antriebseinrichtungen (26, 46) zum Antreiben wenigstens einer Transporteinrichtung (2, 4) charakteristischen Messwert erfasst und eine Steuerungseinrichtung (16), welche dazu geeignet und bestimmt ist, die Antriebseinrichtung (50) zum Bewegen der Halteelemente (42) in Abhängigkeit von diesem charakteristischen Messwert zu steuern, wobei die Sensoreinrichtung (18) wenigstens einen Messwert erfasst, der für ein Drehmoment der wenigstens einen Antriebseinrichtung (26,46) charakteristisch ist.

2. Vorrichtung (1) nach Anspruch 1,
**dadurch gekennzeichnet, dass**
die Antriebseinrichtung (50) zum Bewegen der Halteelemente eine Führungskurve (56) aufweist, welche sich wenigstens abschnittsweise entlang des Transportpfads der Halteelemente (42) erstreckt.

3. Vorrichtung (1) nach Anspruch 2,
**dadurch gekennzeichnet, dass**
die Antriebseinrichtung (50) eine Stelleinrichtung (58) zum Bewegen der Führungskurve (56) aufweist.

4. Vorrichtung (1) nach wenigstens einem der vorangegangenen Ansprüche,
**dadurch gekennzeichnet, dass**
die Vorrichtung (1) eine erste Antriebseinrichtung (26) zum Antreiben der ersten Transporteinrichtung (2) und eine zweite Antriebseinrichtung (46) zum Antreiben der zweiten Transporteinrichtung (4) aufweist.

5. Vorrichtung (1) wenigstens einem der vorangegangenen Ansprüche,
**dadurch gekennzeichnet, dass**
wenigstens eine Antriebseinrichtung (26, 46) zum Antreiben wenigstens einer Transporteinrichtung (2,4) einen Servomotor aufweist.

6. Vorrichtung (1) nach wenigstens einem der vorangegangenen Ansprüche,
**dadurch gekennzeichnet, dass**
eine Relativposition der Aufnahmemitteln (22) der ersten Transporteinrichtung (2) in der Umlaufrichtung der ersten Transporteinrichtung (2) gegenüber einer Position der Halteelemente bezüglich des Transportpfads (P) veränderbar ist.

7. Vorrichtung (1) nach wenigstens einem der vorangegangenen Ansprüche,
**dadurch gekennzeichnet, dass**
die Vorrichtung (1) eine Prozessoreinrichtung (36) aufweist, welche aus wenigstens einer Kenngröße eines Kunststoffvorformlings einen Offset zwischen den beiden Antriebseinrichtungen (26, 46) ermittelt.

8. Vorrichtung (1) nach wenigstens einem der vorangegangenen Ansprüche,
**dadurch gekennzeichnet, dass**
diese Antriebseinrichtung (50) zum Bewegen der Halteelemente im laufenden Maschinenbetrieb deaktivierbar ist.

9. Verfahren zum Erwärmen von Kunststoffvorformlingen (10), wobei die Kunststoffvorformlinge (10) mittels Aufnahmemitteln (22) einer ersten Transporteinrichtung (2) transportiert werden und in einer vorgegebenen Übernahmeposition von einer zweiten Transporteinrichtung (4) übernommen werden und von dieser zweiten Transporteinrichtung (4) mittels Halteelementen (42), welche die Kunststoffvorformlinge (10) halten, entlang eines vorgegebenen Transportpfads (P) transportiert werden und wenigstens zeitweise während dieses Transports entlang des Transportpfads von wenigstens einer Erwärmungseinrichtung (6) erwärmt werden, wobei wenigstens eine Antriebseinrichtung (26, 46) wenigstens eine Transporteinrichtung (2, 4) antreibt und die Halteelemente (42) in einer Längsrichtung (L) der Kunststoffvorformlinge (10) mittels einer weiteren Antriebseinrichtung (50) bewegt werden, wobei wenigstens ein für wenigstens die Antriebseinrichtung (26, 46), welche wenigstens eine Transporteinrichtung (2, 4) antreibt, charakteristischer Messwert erfasst wird und die weitere Antriebseinrichtung (50), welche die Halteelemente (42) bewegt, in Abhängigkeit von diesem Messwert gesteuert wird, wobei der charakteristische Messwert ein für ein Drehmoment der Antriebseinrichtung charakteristischer Messwert ist.

10. Verfahren nach Anspruch 9,
**dadurch gekennzeichnet, dass**
der Messwert kontinuierlich erfasst wird und/oder mit einem Referenzwert verglichen wird.

## Claims

1. An apparatus (1) for heating plastic preforms (10), comprising a first transport device (2) that transports the plastic preforms (10) in a separated manner, wherein said first transport device (2) has a plurality of reception means (22) for receiving the plastic preforms (10), comprising a second transport device (4) that takes over the plastic preforms transported by the first transport device (2) and transports said plastic preforms (10) along a predetermined transport path (P), wherein the second transport device (4) has a plurality of holding elements (42) for holding the plastic preforms (10) and at least one heating device (6) that heats the plastic preforms (10) transported by the second transport device (4), wherein at least the first transport device (2) is a circulating transport device (2), wherein the apparatus comprises a drive device (50) for moving the holding elements (42) in a longitudinal direction (L) of the plastic preforms (10), and the apparatus (1) has at least one drive device (26, 46) for driving at least one transport device (2, 4), wherein the apparatus has at least one sensor device (18),
**characterized in that**
the sensor device (18) detects at least one of the two drive devices (26, 46) for driving at least one transport device (2, 4) characteristic measured value, and a control device (16) suitable and designed for controlling the drive device (50) for moving the holding elements (42) as a function of this characteristic measured value, wherein the sensor device (18) detects at least one measured value that is characteristic of a torque of the at least one drive device (26, 46).

2. The apparatus (1) as claimed in claim 1,
**characterized in that**
the drive device (50) has a guiding cam (56) for moving the holding elements, which guiding cam extends, at least in sections, along the transport path of the holding elements (42).

3. The apparatus (1) as claimed in claim 2,
**characterized in that**
the drive device (50) has an actuation device (58) for moving the guiding cam (56).

4. The apparatus (1) according to at least one of the preceding claims, **characterized in that**
the apparatus (1) has a first drive device (26) for driving the first transport device (2) and a second drive device (46) for driving the second transport device (4).

5. The apparatus (1) according to at least one of the preceding claims, **characterized in that**
at least one drive device (26, 46) for driving at least one transport device (2, 4) includes a servo motor.

6. The apparatus (1) according to at least one of the preceding claims , **characterized in that**
a relative position of the reception means (22) of the first transport device (2) can be changed in the circulating direction of the first transport device (2) relative to a position of the holding elements in respect of the transport path (P).

7. The apparatus (1) according to at least one of the preceding claims , **characterized in that**
the apparatus (1) has a processor device (36) that determines, from at least one characteristic value of a plastic preform, an offset between the two drive devices (26, 46).

8. The apparatus (1) according to at least one of the preceding claims , **characterized in that**
said drive device (50) can be deactivated for moving the holding elements during the on-going machine operation.

9. A method for heating plastic preforms (10), wherein the plastic preforms (10) are transported by means of reception means (22) of a first transport device (2) and are taken over by a second transport device (4) in a predetermined take-over position and are transported by said second transport device (4) by means of holding elements (42) that hold the plastic preforms (10) along a predetermined transport path (P), and are heated, at least temporally, during the transport along the transport path by at least one heating device (6), wherein at least one drive device (26, 46) drives at least one transport device (2,4) and the holding elements (42) are moved in the longitudinal direction (L) of the plastic preforms (10) by means of a further drive device (50), wherein at least one measured value that is characteristic of at least the drive device (26, 46), which drives at least one transport device (2, 4), is detected and the further drive device (50), which moves the holding elements (42), is controlled as a function of this measured value, wherein the characteristic measured value is a measured value that is characteristic of a torque of the drive device.

10. The method as claimed in claim 9,
**characterized in that**
the measured value is continuously detected and/or is compared with a reference value.

## Revendications

1. Dispositif (1) de chauffage de préformes en matière plastique (10) avec un premier équipement de transport (2), lequel transporte les préformes en matière plastique (10) une par une, dans lequel ce premier équipement de transport (2) présente une pluralité de moyens de réception (22) pour recevoir des préformes en matière plastique (10), avec un second équipement de transport (4), lequel prend en charge les préformes en matière plastique transportées par le premier équipement de transport (2) et transporte ces préformes en matière plastique (10) le long d'un chemin de transport (P) prédéfini, dans lequel le second équipement de transport (4) présente une pluralité d'éléments de maintien (42) pour maintenir les préformes en matière plastique (10) et avec au moins un équipement de chauffage (6), lequel chauffe les préformes en matière plastique (10) transportées par le second équipement de transport (4), dans lequel au moins le premier équipement de transport (2) est un équipement de transport (2) circonférentiel, dans lequel le dispositif présente un équipement d'entraînement (50) pour déplacer les éléments de maintien (42) dans une direction longitudinale (L) des préformes en matière plastique (10) et le dispositif (1) présente au moins un équipement d'entraînement (26, 46) pour entraîner au moins un équipement de transport (2, 4), dans lequel le dispositif présente au moins un équipement de détection (18), **caractérisé en ce que** l'équipement de détection saisit au moins une valeur de mesure caractéristique pour au moins l'un des deux équipements d'entraînement (26, 46) pour entraîner au moins un équipement de transport (2, 4), et un équipement de commande (16), lequel est approprié et déterminé pour commander l'équipement d'entraînement (50) pour déplacer les éléments de maintien (42) en fonction de cette valeur de mesure caractéristique, dans lequel l'équipement de détection (18) saisit au moins une valeur de mesure qui est caractéristique pour un couple du au moins un équipement d'entraînement (26, 46).

2. Dispositif (1) selon la revendication 1,
**caractérisé en ce que**
l'équipement d'entraînement (50) présente une courbe de guidage (56) pour déplacer les éléments de maintien, laquelle s'étend au moins par endroits le long du chemin de transport des éléments de maintien (42).

3. Dispositif (1) selon la revendication 2,
**caractérisé en ce que**
l'équipement d'entraînement (50) présente un équipement de réglage (58) pour déplacer la courbe de guidage (56).

4. Dispositif (1) selon au moins l'une des revendications précédentes, **caractérisé en ce que**
le dispositif (1) présente un premier équipement d'entraînement (26) pour entraîner le premier équipement de transport (2) et un second équipement d'entraînement (46) pour entraîner le second équipement de transport (4).

5. Dispositif (1) selon au moins l'une des revendications précédentes, **caractérisé en ce que**
au moins un équipement d'entraînement (26, 46) pour entraîner au moins un équipement de transport (2, 4) présente un servomoteur.

6. Dispositif (1) selon au moins l'une des revendications précédentes, **caractérisé en ce que**
une position relative des moyens de réception (22) du premier équipement de transport (2) est modifiable dans la direction circonférentielle du premier équipement de transport (2) par rapport à une position des éléments de maintien s'agissant du chemin de transport (P).

7. Dispositif (1) selon au moins l'une des revendications précédentes, **caractérisé en ce que**
le dispositif (1) présente un équipement de processeur (36), lequel établit un décalage entre les deux équipements d'entraînement (26, 46) à partir d'au moins une grandeur caractéristique d'une préforme en matière plastique.

8. Dispositif (1) selon au moins l'une des revendications précédentes, **caractérisé en ce que**
cet équipement d'entraînement (50) pour déplacer les éléments de maintien peut être désactivé pendant le fonctionnement en cours de la machine.

9. Procédé de chauffage de préformes en matière plastique (10) dans lequel les préformes en matière plastique (10) sont transportées au moyen de moyens de réception (22) d'un premier équipement de transport (2) et sont prises en charge dans une position de prise en charge prédéfinie par un second équipement de transport (4) et sont transportées par ce second équipement de transport (4) au moyen d'éléments de maintien (42), lesquels maintiennent les préformes en matière plastique (10), le long d'un chemin de transport (P) prédéfini et sont chauffées au moins temporairement pendant ce transport le long du chemin de transport par au moins un équipement de chauffage (6), dans lequel au moins un équipement d'entraînement (26, 46) entraîne au moins un équipement de transport (2, 4) et les éléments de maintien (42) sont déplacés dans une direction longitudinale (L) des préformes en matière plastique (10) au moyen d'un autre équipement d'entraînement (50), dans lequel au moins une valeur de mesure caractéristique est saisie pour au moins l'équipement d'entraînement (26, 46), lequel entraîne au moins un équipement de transport (2, 4) et l'autre équipement d'entraînement (50), lequel déplace les éléments de maintien (42), est commandé en fonction de cette valeur de mesure, dans lequel la valeur de mesure caractéristique est une valeur de mesure caractéristique pour un couple de l'équipement d'entraînement.

10. Procédé selon la revendication 9,
**caractérisé en ce que**
la valeur de mesure est saisie en continu et/ou comparée à une valeur de référence.
